(19) Europäisches Patentamt
European Patent Office
Office européen des brevets

(11) **EP 2 852 518 B1**

(12) **FASCICULE DE BREVET EUROPEEN**

(45) Date de publication et mention
de la délivrance du brevet:
**12.04.2017 Bulletin 2017/15**

(51) Int Cl.:
*B60T 1/10* (2006.01)  *B60W 20/14* (2016.01)
*B60W 10/184* (2012.01)  *B60W 30/18* (2012.01)
*B60W 50/00* (2006.01)

(21) Numéro de dépôt: **13729989.7**

(22) Date de dépôt: **17.05.2013**

(86) Numéro de dépôt international:
**PCT/FR2013/051094**

(87) Numéro de publication internationale:
**WO 2013/175114 (28.11.2013 Gazette 2013/48)**

(54) **ANALYSE DU COMPORTEMENT D'UN SYSTÈME DE FREINAGE DE VÉHICULE A PÉDALE DÉCOUPLÉE**

ANALYSE DES VERHALTENS EINES FAHRZEUGBREMSSYSTEMS MIT EINEM ENTKOPPELTEN PEDAL

ANALYSIS OF THE BEHAVIOUR OF A VEHICLE BRAKING SYSTEM WITH A DECOUPLED PEDAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2012 FR 1254642**

(43) Date de publication de la demande:
**01.04.2015 Bulletin 2015/14**

(73) Titulaire: **Renault S.A.S.**
**92100 Boulogne-Billancourt (FR)**

(72) Inventeurs:
• **AZZI, Hamid**
  **F-78310 Maurepas (FR)**
• **PITA-GIL, Guillermo**
  **F-Paris 75014 (FR)**

(56) Documents cités:
**WO-A1-2011/143165     WO-A2-2011/132074
US-A1- 2010 179 714     US-A1- 2012 056 470
US-A1- 2012 074 768**

**Description**

L'invention concerne l'analyse à posteriori du comportement d'un système de freinage de véhicule à pédale découplée.

Le véhicule peut par exemple être un véhicule électrique ou hybride.

Sur un véhicule équipé d'au moins un moteur de traction ou de propulsion électrique, il est possible, sous certaines conditions, d'utiliser le moteur électrique comme générateur et d'obtenir ainsi un moyen de freinage électrique. Une telle utilisation est avantageuse car régénérative, elle permet de récupérer une partie de l'énergie afin de recharger les batteries.

Lorsque le conducteur appuie sur la pédale de frein, une consigne de freinage globale issue de cette pédale peut être au moins en partie transformée en une consigne de freinage régénérative, par exemple en consigne de freinage électrique.

La demanderesse a ainsi développé un système de freinage pour véhicule automobile équipé d'un moyen de freinage régénératif, par exemple un moyen de freinage électrique, et équipé d'un moyen de freinage complémentaire, par exemple un moyen de freinage hydraulique. Ce système de freinage comprend notamment un dispositif de répartition, par exemple intégré dans un ou plusieurs processeur(s), agencé pour générer à partir d'une consigne de freinage global issu de la pédale de frein conducteur, une consigne de freinage régénératif à l'intention du moyen de freinage régénératif, et une consigne de freinage complémentaire destinée au moyen de freinage complémentaire.

Ce système de freinage a été développé en tentant de prendre en compte les problèmes considérés comme susceptibles de se produire lors de l'usage du véhicule.

Par exemple, un basculement d'un freinage tout électrique vers le tout hydraulique peut s'accompagner d'une courte variation du couple de freinage réellement appliqué. L'utilisateur peut ainsi avoir une sensation de dé-freinage liée à un tel trou de décélération. La demande de brevet non encore publiée FR1159106 décrit un procédé permettant de remédier à ce problème.

US 2010/179714 A1 divulgue un procédé et le dispositif associé selon le préambule de la revendication 1 et la revendication 9 associée. Néanmoins, il existe un besoin pour une meilleure compréhension du comportement d'un système de freinage de véhicule à pédale découplée, notamment en situation d'utilisation réelle.

Il est proposé un procédé de diagnostic pour une analyse a posteriori du comportement d'un système de freinage de véhicule, le système de freinage comportant un moyen de freinage régénératif, un moyen de freinage complémentaire, et un dispositif de répartition agencé pour générer à partir d'une consigne de freinage globale une consigne de freinage régénératif destinée au moyen de freinage régénératif, et une consigne de freinage complémentaire destinée au moyen de freinage complémentaire. Le procédé comprend :

une étape de stockage dans une mémoire non volatile d'au moins une valeur courante de paramètre de freinage issue du dispositif de répartition pour une analyse ultérieure basée sur ladite au moins une valeur stockée dans la mémoire non volatile, l'étape de stockage étant conditionnée par la réalisation d'au moins un évènement.

Ainsi, un tel enregistrement de donnée(s) courante(s) du système de freinage peut permettre de mieux vérifier la fiabilité du système de freinage, dans la mesure où ces données correspondent à des situations de conduite réelle.

Les valeurs stockées issues du dispositif de répartition peuvent être par exemple :

- des valeurs de signaux de consigne, par exemple reçues du dispositif de répartition, par exemple des valeurs de consigne de freinage régénératif et/ou complémentaire,
- des valeurs fonctions de valeurs de signaux de consigne, par exemple reçues de capteurs, par exemple une valeur de couple appliqué par un actionneur en communication avec le dispositif de répartition,
- des valeurs élaborées en fonction des valeurs énoncées ci-dessus, par exemple un ratio de répartition de freinage entre le moyen de freinage régénératif et le moyen de freinage complémentaire, et/ou
- autre.

Par « signal de commande de freinage » on entend aussi bien une consigne de freinage, générée par le dispositif de répartition, et un signal correspondant à une commande effectivement appliquée par un moyen de freinage. La valeur stockée peut par exemple être un signal de commande de freinage ou bien avoir été élaborée à partir d'un ou plusieurs signal(aux) de commande de freinage.

Les valeurs stockées peuvent par exemple comprendre la valeur de consigne de freinage régénératif, une valeur de pression de maître cylindre, ou autre. En fait, l'invention n'est limitée par la nature du ou des paramètres de freinage que dans la mesure où ce ou ces paramètre(s) est(sont) au moins en partie issus du dispositif de répartition, étant entendu que les paramètres relatifs au moyens de freinage régénératif et au moyen de freinage complémentaire sont issus du dispositif de répartition.

Selon l'invention, on prévoit de conditionner l'étape de stockage à la réalisation d'au moins un évènement.

En effet, conserver en mémoire l'ensemble des valeurs courantes de la consigne de freinage électrique, de la consigne de freinage hydraulique, de la pression de maitre cylindre, et/ou d'autres valeurs relatives au système de freinage, pendant toute la durée d'une mission, pourrait impliquer des débordements de taille mémoire, ou bien imposer des contraintes au constructeur quant à la taille des mémoires embarquées dans le véhicule. En rendant ce stockage soumis à condition, on peut concilier limitation de la quantité de données enregistrées et pertinence des données enregistrées.

Avantageusement, et de façon non limitative, le procédé peut comprendre une étape de détection de requête de freinage conducteur, et l'étape de stockage peut être effectuée en cas de détection de requête de freinage conducteur. Ainsi, on effectue un enregistrement des données relatives au système de freinage, suite à une sollicitation de ce système de freinage.

Le procédé peut par exemple comprendre une étape de réception d'un signal issu d'un capteur de position de la pédale de freinage, d'un capteur de pression du système de pédale de freinage, d'un signal d'allumage de feux stop, et/ou autre.

Cette mémorisation de données relatives au système de freinage suite à une requête de freinage de la part du conducteur, peut permettre de mieux comprendre le comportement du système de freinage, en se basant sur les données mémorisées.

Avantageusement et de façon non limitative, le procédé peut comprendre une étape de détection d'évènements correspondant à des variations brutales d'au moins un signal de commande du véhicule, par exemple de la consigne de freinage régénérative et/ou de la pression de maitre cylindre. Lorsqu'une telle détection est réalisée, le stockage de données relatives au système de freinage peut être effectué.

En effet, de telles variations brutales peuvent correspondre à une situation particulière du véhicule, ou bien encore à une sensation particulière pour le conducteur. Stocker des données relatives au comportement du système de freinage lorsqu'une telle situation se produit peut là encore permettre de mieux comprendre et mieux analyser le comportement de ce système de freinage.

Avantageusement et de façon non limitative, le procédé peut comprendre une étape de détection de passage rapide d'un moyen de freinage à l'autre.

Par exemple, on peut prévoir de comparer régulièrement les valeurs de commande de freinage régénératif et/ou complémentaire issues du dispositif de répartition, et lorsque la différence entre deux valeurs consécutives de la commande de freinage régénérative et/ou entre deux valeurs consécutives de la commande de freinage complémentaire est supérieure à un seuil respectif, de considérer qu'il y a eu un passage rapide d'un actionneur à l'autre. Un tel passage brutal d'un actionneur à l'autre peut être assimilé à une situation à risque du fait de l'éventuelle sensation de dé-freinage de la part du conducteur.

Ainsi, le procédé peut comprendre une étape de test consistant à comparer à un seuil les variations d'une commande de freinage régénérative, par exemple le signal correspondant au couple de freinage effectivement appliqué, et/ou de la commande de freinage complémentaire, par exemple une valeur de pression cylindre ou bien encore une valeur de signal de consigne de freinage hydraulique générée par le dispositif de répartition.

Avantageusement et de façon non limitative, l'étape de détection peut consister à recevoir un signal de commande issu d'un système de sécurité actif, par exemple l'ABS (de l'allemand « AntiBlockierSystem »), l'ESP (de l'anglais « Electronic Stability program ») et/ou le MSR (de l'allemand « Motor Schlepp Regelung »). Si un tel système de sécurité est amené à se déclencher, alors il peut être considéré que le véhicule se trouve dans une situation très particulière, et que l'analyse du comportement du système de freinage peut être fructueuse.

Avantageusement et de façon non limitative, on peut prévoir d'interdire le stockage des données relatives au système de freinage lorsque la vitesse du véhicule est inférieure à un seuil. Ceci peut permettre d'éviter de conserver en mémoire des données ne correspondant pas à une situation de freinage effectué pendant une mission conducteur effective.

Avantageusement et de façon non limitative, on peut prévoir de comparer à un seuil une différence entre une valeur de l'odométrie du véhicule lors d'un précédent stockage mémoire de valeurs de paramètres relatifs au système de freinage, et de l'odométrie courante, et d'interdire le stockage si cette différence est inférieure à un seuil. Dit autrement, toute écriture en mémoire correspond à un certain kilométrage effectué depuis l'écriture précédente. Là encore, ceci peut permettre d'éviter de stocker en mémoire des valeurs non pertinentes.

Avantageusement, et de façon non limitative, on peut prévoir que l'étape de stockage dans la mémoire non volatile, comprenne une étape d'écriture dans une mémoire volatile, et une étape d'écriture dans la mémoire non volatile en cas de détection de fin de mission.

Ceci peut permettre de limiter le nombre d'opérations d'écriture sur la mémoire non volatile. En effet, les défaillances éventuelles correspondent en général à une fin de mission, de sorte que cette copie dans la mémoire non volatile en fin de mission seulement, peut permettre de concilier le nombre d'écritures dans la mémoire non volatile et la pertinence des données stockées.

Avantageusement, et de façon non limitative, on peut détecter la fin de mission en cas d'extinction nominale d'un calculateur et/ou en cas de réception d'un signal de déclenchement d'un coussin gonflable de sécurité ou airbag. En effet, en cas de déclenchement d'un airbag, le calculateur peut être éteint de façon brutale, afin d'éviter tout risque d'incendie. Ainsi, en assimilant le déclenchement de l'airbag à une fin de mission, on peut permettre de stocker des données correspondant à une situation de déclenchement de l'airbag, et donc probablement pertinentes, même si le calculateur ne s'éteint alors pas normalement.

Avantageusement et de façon non limitative, on peut prévoir de stocker, outre la ou les valeur(s) courante(s) de paramètre(s) de freinage, une ou plusieurs valeur(s) supplémentaire(s), correspondant à un ou des instant(s) antérieur(s) et/ou postérieur(s) à l'instant courant. Dit autrement, on collecte des données sur une fenêtre temporelle, correspondant par exemple à une durée de l'ordre de la seconde, afin de mieux comprendre le comportement du système de freinage pendant une période critique.

Avantageusement et de façon non limitative, cette ou ces valeur(s) supplémentaire(s) peuvent être choisies en fonction du type d'évènement ayant déclenché la réalisation de l'étape de stockage. Ainsi, le début et/ou la fin de la fenêtre temporelle pendant laquelle on réalise la sauvegarde peu(ven)t être ajustés selon le type d'évènement détecté. Par exemple, en cas de détection de requête de freinage, on pourra préférer stocker davantage de valeurs postérieures à la détection que de valeurs antérieures à cette détection. En revanche, en cas de déclenchement de l'ABS ou autre, on pourra prévoir de stocker un certain nombre de valeurs correspondant à des instants précédents l'instant du déclenchement de l'ABS, afin de mieux comprendre ce qui a pu conduire à ce déclenchement.

Il est en outre proposé un produit programme d'ordinateur comprenant les instructions pour exécuter les étapes du procédé décrit ci-dessus.

Ce procédé peut notamment être mis en oeuvre dans des moyens de traitement numérique du signal, par exemple un processeur.

Le programme d'ordinateur peut par exemple être stocké dans un support mémoire, par exemple un disque dur, ou bien encore être téléchargé depuis un réseau de communication, ou autre.

Il est en outre proposé un dispositif de diagnostic pour une analyse a posteriori du comportement d'un système de freinage d'un véhicule automobile, le système de freinage comprenant un moyen de freinage régénératif, par exemple un moyen de freinage électrique, un moyen de freinage complémentaire, par exemple un moyen de freinage hydraulique, et un dispositif de répartition agencé pour générer à partir d'une consigne de freinage global issu d'une pédale de freinage une consigne de freinage régénératif destinée au moyen de freinage régénératif, et une consigne de freinage complémentaire destinée au moyen de freinage complémentaire. Le dispositif comprend des moyens de stockage dans une mémoire non volatile d'au moins une valeur courante de paramètre de freinage issue du dispositif de répartition pour une analyse ultérieure basée sur cette au moins une valeur stockée.

Ce dispositif peut par exemple comprendre ou être intégré dans un processeur, par exemple un micro contrôleur ou autre.

Ce dispositif peut comprendre des moyens de réception d'un ensemble d'au moins une valeur de paramètre de freinage, comprenant au moins une valeur issue du dispositif de répartition, par exemple une valeur de pression cylindre et/ou une valeur de cosigne de freinage complémentaire. Les moyens de réception peuvent par exemple comprendre une pin d'entrée, un port d'entrée ou autre.

Les moyens de stockage peuvent par exemple comprendre un coeur de processeur ou CPU (de l'anglais « Central Processing Unit »).

Le dispositif de diagnostic peut en outre comprendre la mémoire non volatile proprement dite, ainsi éventuellement une mémoire volatile pour des mémorisations temporaires.

Il est en outre proposé un système de gestion de freinage d'un véhicule comprenant un moyen de freinage régénératif et un moyen de freinage complémentaire, ce système de gestion de freinage comprenant un dispositif de répartition apte à générer à partir d'une valeur de consigne de freinage global issu d'une interface utilisateur, une consigne de freinage régénératif destinée au moyen de freinage régénératif, et une consigne de freinage complémentaire destinée au moyen de freinage complémentaire. Le système comprend en outre un dispositif de diagnostic tel que décrit ci-dessus. Ce système peut par exemple comprendre ou être intégré dans un processeur, par exemple un micro contrôleur, un microprocesseur ou autre.

Il est en outre proposé un véhicule, par exemple un véhicule automobile électrique et/ou hybride, comprenant un système de gestion de freinage tel que décrit ci-dessus et/ou un système de freinage, et/ou un dispositif de diagnostic tel que décrit ci-dessus.

L'invention sera mieux comprise en référence aux figures, lesquelles illustrent des modes de réalisation non limitatifs.

La figure 1 montre un exemple de véhicule selon un mode de réalisation de l'invention.

La figure 2 montre est un organigramme d'un exemple de procédé selon un mode de réalisation de l'invention.

La figure 3 montre une partie d'un exemple de dispositif de diagnostic selon un mode de réalisation de l'invention.

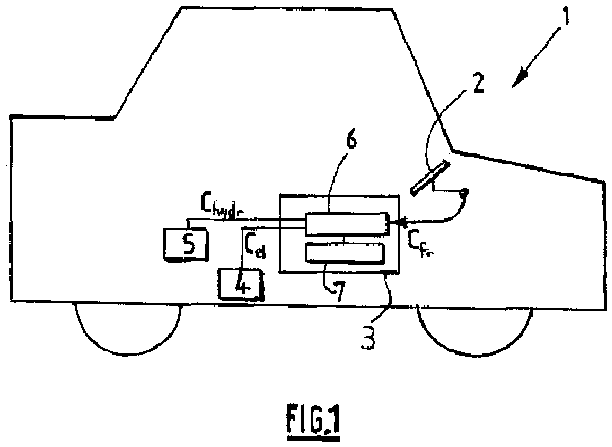

En référence à la figure 1, le véhicule 1 par exemple un véhicule électrique ou hybride, comprend une pédale de freinage 2, un moyen de freinage électrique représenté schématiquement par la référence 4, et un moyen de freinage hydraulique représenté schématiquement par la référence 5.

Le véhicule 1 comporte en outre un système de gestion de freinage, par exemple un calculateur 3.

Ce calculateur 3 inclut un dispositif de répartition 6 apte à générer à partir d'un signal de consigne de freinage global $C_{fr}$ issu de la pédale 2, un signal de consigne de freinage électrique $C_{el}$ destiné à l'actionneur électrique 4, et un signal de consigne de freinage hydraulique $C_{hydr}$ destiné à l'actionneur hydraulique 5.

Le calculateur 3 comprend en outre un dispositif de diagnostic 7 agencé de façon à effectuer certaines sauvegardes de valeurs de paramètres du calculateur 3.

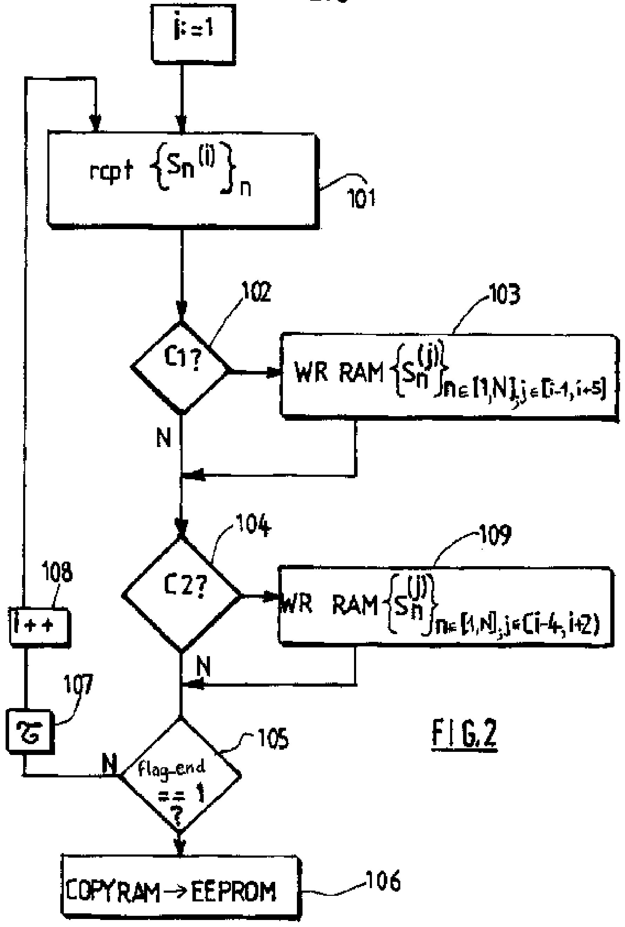

En référence à la figure 2, le dispositif de diagnostic référencé 7 sur la figure 1 reçoit régulièrement un ensemble de N valeurs de signaux $\{S_n^{(i)}\}$ relatifs au système de freinage, lors d'étapes 101. L'indice n varie de 1 à N.

Cet ensembles de N valeurs prises au cycle i peut comprendre des valeurs de :

- signaux issus de capteurs de position de la pédale de frein,

- signal de drapeau indiquant un allumage des feux stop,

- signal issu d'un capteur de pression pédale,

- signal de consigne de freinage globale issue de l'interface conducteur,

- signal de consigne de freinage hydraulique générée par le dispositif de répartition,

- signal de consigne de freinage électrique générée par le dispositif de répartition,

- signal de commande électrique effectivement appliquée,

- signal issu d'un capteur de pression de maître cylindre,

- signal de vitesse du véhicule,

- signal d'angle volant,

- des signaux de drapeaux indiquant le déclenchement de systèmes de sécurités actifs ABS, ESP, ASR (de l'allemand « Antriebs-Schlupf-Regelung »), MSR (de l'allemand « Motor Schleppmoment Regelung »), ou autre,

- signaux d'ordres de déclenchement d'airbag, et/ou de

- signaux d'odométrie du véhicule.

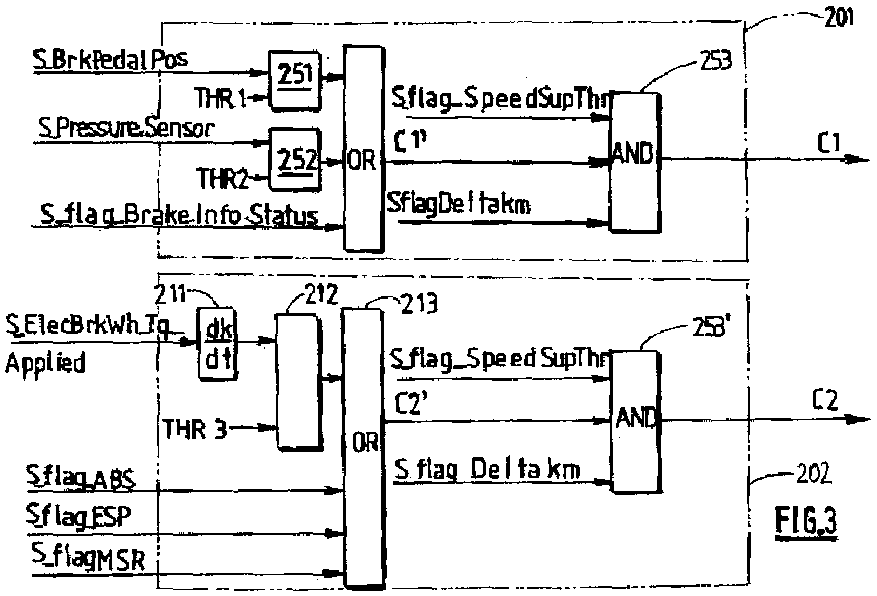

Lors d'un test 102, le calculateur détermine à partir d'au moins certaines des valeurs de signaux reçues si le système de freinage est sollicité par le conducteur, c'est-à-dire si le conducteur appuie sur la pédale de frein. Cette détermination sera décrite plus en détails en référence à la figure 3.

Si le test 102 est positif, alors l'ensemble des signaux reçus à l'étape 101 est recopié dans une mémoire vive, lors d'une étape 103, et ce sur un certain nombre de cycles indicés i, comme explicité plus loin.

Le calculateur détermine au cours d'un test 104 si le véhicule se trouve dans une situation correspondant à des variations abruptes d'un signal de commande, notamment d'un des signaux issus de systèmes de sécurité actifs, du signal de commande de freinage électrique effectivement appliquée, du signal de consigne de freinage électrique et/ou du signal de consigne de freinage hydraulique. Cette détermination sera décrite de façon plus détaillée en référence à la figure 3.

Si le test 104 est positif, c'est-à-dire s'il s'avère que certains signaux du dispositif de freinage varient brutalement, alors les valeurs de signaux reçus à l'étape 101 sont recopiées dans une mémoire vive au cours de l'étape 109, là encore pour certains des cycles i.

Les valeurs stockées comprennent notamment :

- une valeur de commande de freinage régénératif, par exemple une valeur de signal de consigne de freinage électrique générée par le dispositif de répartition, une valeur de signal de commande électrique effectivement appliquée, et/ou autre, et/ou

- une valeur de commande de freinage complémentaire, par exemple une valeur de signal de consigne de freinage hydraulique générée par le dispositif de répartition, une valeur de signal issue d'un capteur de pression de maître cylindre, et/ou autre.

On peut prévoir de conserver dans une mémoire tampon une pluralité d'ensembles de N valeurs $\{S_n^{(i)}\}$, chaque ensemble de valeur de cette pluralité correspondant à un échantillon temporel. Ainsi, outre l'ensemble de N valeurs $\{S_n^{(i)}\}$ correspondant à l'instant courant, on stocke au moins un autre ensemble de N valeurs correspondant à un instant antérieur et/ou postérieur à cet instant courant.

Lorsque le test 102 est positif, c'est-à-dire si le calculateur détecte une requête de freinage de la part de l'utilisateur, on pourra prévoir de recopier plusieurs ensembles de N valeurs, par exemple un ensemble de N valeurs précédent l'échantillon indicé i, l'ensemble de N valeurs correspondant au cycle i et cinq ensembles de N valeurs correspondant à des cycles ultérieurs respectifs. Ces sept ensembles de N valeurs sont écrits dans un registre correspondant à cette détection de requête de freinage.

En effet en cas de détection de freinage conducteur, il est en effet plus pertinent de stocker davantage de données du système de freinage postérieures à cette détection que de données antérieures à cette détection.

Lorsque le test 104 est positif, alors au cours de l'étape 109, on écrit dans la mémoire vive l'ensemble de valeurs reçues au $i^{ème}$ cycle, (c'est-à-dire l'ensemble de valeurs courant), ainsi qu'une pluralité d'ensemble de valeurs reçues au cours des cycles précédant et suivant le cycle courant, par exemple quatre ensembles de N valeurs correspondant à des échantillons temporels antérieurs à l'échantillon temporel correspondant au cycle courant et deux ensembles de N valeurs correspondant à des échantillons temporels postérieurs à l'échantillon temporel correspondant au cycle courant. Dit autrement, la fenêtre de sauvegarde est décalée vers les instants précédents la détection de situation à risque, ceci afin de mieux comprendre les causes de ces variations brutales. Ces sept ensembles de N valeurs sont écrits dans un registre correspondant à cette détection de variation brutale.

Afin de pouvoir écrire en mémoire vive des valeurs correspondant à des cycles antérieurs, on pourra prévoir une mémoire tampon pour au moins certains des N signaux reçus à l'étape 101. Pour chacun de ces signaux, cette mémoire tampon peut par exemple permettre de stocker sept valeurs. Pour un pas d'échantillonnage de 80 ms, sept valeurs permettent ainsi de couvrir une période de prés de 480 ms. Par exemple, on pourra prévoir une mémoire tampon pour chacun des signaux reçus à l'étape 101, à l'exception du signal d'odométrie car sur une durée inférieure à la seconde, les variations de ce signal, par exemple précis au mètre prés, sont peu significatives.

Le dispositif de diagnostic référencé 7 sur la figure 1 comprend un certain nombre de registres, par exemple dix registres, certains de ces registres étant alloués à la réalisation d'un évènement correspondant à une variation brutale d'un signal de commande (condition C2), et les autres de ces registres étant alloués à la réalisation d'un évènement correspondant à un appui sur la pédale de freinage (condition C1).

Par exemple, parmi les dix registre du dispositif de diagnostic 7, sept registres correspondent à la réalisation de la condition C1, et trois registres correspondent à la réalisation de la condition C2.

Ainsi, le dispositif de diagnostic peut stocker les valeurs correspondant à sept détections d'appui pédale de freinage, et à trois détections de variations brutales de signaux de commande.

Ces registres peuvent être écrits et réécrits (« overwrite » en anglais) au cours d'une même mission. Lorsque le nombre d'écritures en mémoire volatile liées à une condition C1 ou C2 dépasse le nombre de registres alloués à ces conditions respectives, par exemple, lors de la 8ème détection de freinage conducteur au cours d'une même mission, le registre le plus anciennement écrit est écrasé avec les nouvelles données. On pourra s'inspirer d'un procédé dit FIFO (pour « First In, First Out » en anglais).

Pour revenir à la figure 2, le calculateur détecte, au cours d'un test 105 un évènement correspondant à une fin de mission. Plus précisément, le test 105 est positif en cas d'extinction nominale du calculateur, c'est-à-dire lors de la réception d'un signal d'ordre d'extinction du calculateur, ou bien lors de la réception d'un signal de déclenchement de l'airbag.

Si le test 105 est positif, par exemple si un signal de drapeau indiquant une fin de mission flag_end a une valeur égale à 1, alors le contenu de la mémoire vive écrit au cours d'une ou plusieurs étape(s) 103, 109 d'un ou plusieurs cycles antérieurs, c'est-à-dire le contenu des dix registres mentionnés ci-dessus, est recopié dans une mémoire non volatile au cours d'une étape 106.

Le contenu de cette mémoire non volatile pourra être lu ultérieurement, afin de mieux comprendre comme le système de freinage a fonctionné. Ces données pourront permettre de comprendre la racine d'un éventuel problème, par exemple d'identifier un actionneur fautif, ou un dysfonctionnement d'un capteur.

A contrario, si le test 105 est négatif, le calculateur se place dans un état d'attente pendant une durée τ intercycles, au cours d'une étape 107, puis la valeur $i$ indiçant les cycles est incrémentée au cours d'une étape 108. N nouvelles valeurs, correspondant au cycle suivant sont alors reçues au cours de l'étape 101.

En référence à la figure 3, un module 201 de détection de l'évènement C1 comprend des moyens de comparaison 251 d'un signal de capteur de position de pédale de freinage S_BrkPedalPos à un seuil THR1.

Des moyens de comparaison 252 permettent de comparer un signal issu d'un capteur de pression S_PressureSensor à un seuil THR2.

Si le signal issu du capteur de position S_BrkPedalPos dépasse le premier seuil THR1, si le signal issu du capteur de pression S_PressureSensor dépasse le deuxième seuil THR2, ou si un signal d'allumage de feux stop S_flag_BrakeInfoStatus a une valeur égale à 1, alors un premier signal de sortie C1' prend la valeur 1.

Par ailleurs le module 201 comprend une porte ET 253, recevant en entrée le signal C1', ainsi qu'un signal de drapeau S_flag_SpeedSupThr dont la valeur est égale à 1 seulement lorsque la vitesse du véhicule est supérieure à un seuil prédéterminé.

La porte ET 253 reçoit en outre un signal SflagDeltakm dont la valeur est égale à 1, si et seulement si la différence entre l'odométrie du véhicule lors du dernier enregistrement et l'odométrie courante du véhicule est supérieure à un seuil prédéterminé.

Si ces trois signaux S_flag_SpeedSupThr, C1' et SflagDeltakm ont tous des valeurs égales à 1, alors le signal de sortie C1 est égal à 1. Dit autrement, le test 102 de la figure 3 est considéré comme positif.

Le dispositif de diagnostic comporte en outre un module 202 permettant de détecter si la condition C2 est réalisée.

Ce module 202 comprend un module dérivateur 211 apte à effectuer une dérivée temporelle d'un signal de commande électrique effectivement appliquée S_ElecBrkWh_Tq_Applied.

Alternativement, on pourrait par exemple prévoir que ce module 211 reçoive en entrée un signal de consigne de freinage électrique, et/ou un signal de consigne de freinage hydraulique générés par le dispositif de répartition référencé 6 sur la figure 1.

Un module 212 permet de comparer la dérivée temporelle de ce signal de commande S_ElecBrkWh_Tq_Applied à un seuil prédéterminé THR3. Si cette différence de signal de commande est supérieure au seuil THR3, alors le module 212 génère un signal égal à 1.

Le module 202 comprend en outre une porte OU 213 recevant en entrée :

- le signal issu du module 212,

- un signal de drapeau S_flag_ABS signalant le déclenchement d'un système ABS,

- un signal de drapeau S_flag_ESP issu d'un système de régulation ESP et signalant le déclenchement d'une régulation ESP, et

- un signal de drapeau S_flagMSR issu d'un système de régulation MSR et signalant le déclenchement d'une régulation MSR.

Si l'un de ces signaux de drapeaux a une valeur égale à 1, alors la porte OU 213 génère un signal C2' égal à 1.

Une porte ET 253' reçoit en entrée le signal de drapeau S_flag_SpeedSupThr, le signal C2' issu de la porte OU 213 et le signal SflagDeltakm. Si ces trois signaux ont une valeur égale à 1, alors cette porte ET 253' génère un signal C2 égal à 1.

**Revendications**

1. Procédé de diagnostic pour une analyse a posteriori du comportement d'un système de freinage de véhicule, ledit système de freinage comportant un moyen de freinage régénératif, un moyen de freinage complémentaire, et un dispositif de répartition agencé pour générer à partir d'une consigne de freinage globale une consigne de freinage régénératif destinée au moyen de freinage régénératif, et une consigne de freinage complémentaire destinée au moyen de freinage complémentaire, le procédé comprenant
une étape de stockage (103, 109, 106) dans une mémoire non volatile d'au moins une valeur courante de paramètre de freinage issue du dispositif de répartition pour une analyse ultérieure basée sur ladite au moins une valeur stockée dans la mémoire non volatile, **caractérisé en ce que** l'étape de stockage (103, 109, 106) est conditionnée par la réalisation d'au moins un évènement (102, 104, 105).

2. Procédé selon la revendication 1, comprenant en outre

détecter (102) une requête de freinage conducteur, et dans lequel l'étape de stockage (103) est effectuée suite à la détection de requête de freinage conducteur.

3. Procédé selon l'une des revendications 1 à 2, comprenant en outre
détecter (104) un passage rapide du moyen de freinage régénératif au moyen de freinage complémentaire et/ou inversement, et dans lequel l'étape de stockage (109) est effectuée suite à ladite détection.

4. Procédé selon l'une des revendications 1 à 3, comprenant en outre
détecter (104) un déclenchement d'un système de sécurité actif, et dans lequel l'étape de stockage (109) est effectuée suite à ladite détection.

5. Procédé selon l'une des revendications 1 à 4, comprenant en outre
comparer une valeur de vitesse courante du véhicule à un seuil de vitesse,
comparer une valeur de différence d'odométrie du véhicule entre un instant courant et un instant correspondant à un stockage mémoire précédent à un seuil de distance,
et dans lequel l'étape de stockage mémoire (103, 109) est effectuée seulement si la valeur de vitesse courante est supérieure au seuil de vitesse et si la valeur de différence d'odométrie est supérieure au seuil de distance.

6. Procédé selon l'une des revendications 1 à 5, comprenant en outre
écrire (103, 109) ladite au moins une valeur courante de paramètre de freinage dans une mémoire volatile,
détecter une fin de mission (105), et
recopier (106) dans la mémoire non volatile au moins une partie du contenu de la mémoire volatile.

7. Procédé selon l'une des revendications 1 à 6, dans lequel, outre ladite au moins une valeur courante de paramètre de freinage, on stocke au moins une valeur supplémentaire dudit paramètre de freinage, correspondant à au moins un instant respectif antérieur et/ou postérieur à l'instant courant.

8. Procédé selon la revendication 7,
dans lequel
plusieurs types d'évènements (102, 104,105) conditionnent la réalisation de l'étape de stockage (103, 109, 106),
**caractérisé en ce que**
ladite au moins une valeur supplémentaire est choisie en fonction du type d'évènement ayant déclenché la réalisation de l'étape de stockage.

**9.** Dispositif de diagnostic (7) pour une analyse à posteriori du comportement d'un système de freinage d'un véhicule automobile (1), le système de freinage comprenant un moyen de freinage régénératif (4), un moyen de freinage complémentaire (5), et un dispositif de répartition (6) agencé pour générer à partir d'une consigne de freinage globale ($C_{fr}$) issu d'une pédale de freinage (2) une consigne de freinage régénératif ($C_{el}$) destinée au moyen de freinage régénératif, et une consigne de freinage complémentaire ($C_{hydr}$) destinée au moyen de freinage complémentaire, ledit dispositif comprenant :

des moyens de stockage dans une mémoire non volatile d'au moins une valeur courante de paramètre de freinage issu du dispositif de répartition pour une analyse ultérieure basée sur ladite au moins une valeur stockée, ainsi que des moyens de tests de la réalisation d'au moins un évènement (102, 104, 105).

**10.** Véhicule (1) comprenant le moyen de freinage régénératif (4), le moyen de freinage complémentaire (5), le dispositif de répartition (6) et le dispositif de diagnostic (7) selon la revendication 9.

**Patentansprüche**

**1.** Diagnoseverfahren für eine A-Posteriori-Analyse des Verhaltens eines Fahrzeugbremssystems, wobei das Bremssystem ein regeneratives Bremsmittel, ein komplementäres Bremsmittel und eine Verteilungsvorrichtung, die eingerichtet ist, um ausgehend von einem globalen Bremssollwert einen Sollwert für regeneratives Bremsen, der für das regenerative Bremsmittel bestimmt ist, zu erzeugen, umfasst, und einen komplementären Bremssollwert, der für das komplementäre Bremsmittel bestimmt ist, wobei das Verfahren Folgendes umfasst einen Schritt des Speicherns (103, 109, 106) in einem nichtflüchtigen Speicher mindestens eines aktuellen Bremsparameterwerts, der aus der Verteilungsvorrichtung hervorgeht, für eine spätere Analyse basierend auf dem mindestens einen Wert, der in dem nichtflüchtigen Speicher gespeichert ist, **dadurch gekennzeichnet, dass** der Schritt des Speicherns (103, 109, 106) von dem Eintreten mindestens eines Ereignisses (102, 104, 105) abhängt.

**2.** Verfahren nach Anspruch 1, das ferner Folgendes umfasst das Erfassen (102) einer Fahrerbremsanfrage, und wobei der Schritt des Speicherns (103) im Anschluss an das Erfassen einer Fahrerbremsanfrage ausgeführt wird.

**3.** Verfahren nach einem der Ansprüche 1 bis 2, das ferner Folgendes umfasst:

Erfassen (104) eines schnellen Übergangs des regenerativen Bremsmittels auf das komplementäre Bremsmittel und/oder umgekehrt, und wobei der Schritt des Speicherns (109) im Anschluss an das Erfassen ausgeführt wird.

**4.** Verfahren nach einem der Ansprüche 1 bis 3, das ferner Folgendes umfasst Erfassen (104) eines Auslösens eines aktiven Sicherheitssystems, und wobei der Schritt des Speicherns (109) im Anschluss an das Erfassen ausgeführt wird.

**5.** Verfahren nach einem der Ansprüche 1 bis 4, das ferner Folgendes umfasst Vergleichen eines aktuellen Geschwindigkeitswerts des Fahrzeugs mit einem Geschwindigkeitsschwellenwert, Vergleichen eines Odometrie-Unterschiedswerts des Fahrzeugs zwischen einem aktuellen Augenblick und einem Augenblick, der einem vorhergehenden Speichern im Speicher entspricht, mit einer Schwellenentfernung, und wobei der Schritt des Speicherns im Speicher (103, 109) nur ausgeführt wird, falls der aktuelle Geschwindigkeitswert größer ist als der Geschwindigkeitsschwellenwert, und falls der Odometrie-Unterschiedswert größer ist als die Schwellenentfernung.

**6.** Verfahren nach einem der Ansprüche 1 bis 5, das außerdem Folgendes umfasst Schreiben (103, 109) des mindestens einen aktuellen Bremsparameterwerts in einen flüchtigen Speicher, Erfassen eines Aufgabenendes (105), und Kopieren (106) mindestens eines Teils des Inhalts des flüchtigen Speichers in einen nichtflüchtigen Speicher.

**7.** Verfahren nach einem der Ansprüche 1 bis 6, wobei man neben dem mindestens einen aktuellen Bremsparameterwert mindestens einen zusätzlichen Wert des Bremsparameters speichert, der mindestens einem Augenblick jeweils vor und/oder nach dem aktuellen Augenblick entspricht.

**8.** Verfahren nach Anspruch 7, wobei die Ausführung des Schrittes des Speicherns (103, 109, 106) von mehreren Ereignistypen (102, 104, 105) abhängt, **dadurch gekennzeichnet, dass** der mindestens eine zusätzliche Wert in Abhängigkeit von dem Typ des Ereignisses, das das Ausführen des Speicherschritts ausgelöst hat, ausgewählt wird.

9. Diagnosevorrichtung (7) für eine A-Posteriori-Analyse des Verhaltens eines Bremssystems eines Kraftfahrzeugs (1), wobei das Bremssystem ein regeneratives Bremsmittel (4), ein komplementäres Bremsmittel (5) und eine Verteilungsvorrichtung (6) umfasst, die eingerichtet ist, um ausgehend von einem globalen Bremssollwert ($C_{fr}$), der von einem Bremspedal (2) stammt, einen Sollwert für regeneratives Bremsen ($C_{el}$) zu erzeugen, der für das regenerative Bremsmittel bestimmt ist, und einen komplementären Bremssollwert ($C_{hydr}$), der für das komplementäre Bremsmittel bestimmt ist, wobei die Vorrichtung Folgendes umfasst:

Mittel zum Speichern in einem nichtflüchtigen Speicher mindestens eines aktuellen Bremsparameterwerts, der aus der Verteilungsvorrichtung stammt, für eine spätere Analyse, die auf dem mindestens einen gespeicherten Wert basiert, sowie Mittel zum Testen des Eintretens mindestens eines Ereignisses (102, 104, 105).

10. Fahrzeug (1), das das regenerative Bremsmittel (4), das komplementäre Bremsmittel (5), die Verteilungsvorrichtung (6) und die Diagnosevorrichtung (7) nach Anspruch 9 umfasst.

**Claims**

1. Diagnostic method for an a posteriori analysis of the behavior of a vehicle braking system, said braking system comprising a regenerative braking means, a complementary braking means, and a distribution device arranged to generate, from a global braking setpoint, a regenerative braking setpoint intended for the regenerative braking means, and a complementary braking setpoint intended for the complementary braking means, the method comprising a storage step (103, 109, 106) for storing, in a non-volatile memory, at least one current braking parameter value obtained from the distribution device for a subsequent analysis based on said at least one value stored in the non-volatile memory, **characterized in that** the storage step (103, 109, 106) is conditional on the execution of at least one event (102, 104, 105).

2. Method according to Claim 1, further comprising detecting (102) a driver braking request, and in which the storage step (1030) is performed following the detection of a driver braking request.

3. Method according to either of Claims 1 and 2, further comprising detecting (104) a rapid changeover from the regenerative braking means to the complementary braking means and/or vice versa,

and in which the storage step (109) is performed following said detection.

4. Method according to one of Claims 1 to 3, further comprising detecting (104) a triggering of an active safety system, and in which the storage step (109) is performed following said detection.

5. Method according to one of Claims 1 to 4, further comprising comparing a current vehicle speed value to a speed threshold, comparing a vehicle odometry difference value between a current instant and an instant corresponding to a preceding memory storage to a distance threshold, and in which the memory storage step (103, 109) is performed only if the current speed value is above the speed threshold and if the odometry difference value is above the distance threshold.

6. Method according to one of Claims 1 to 5, further comprising writing (103, 109) said at least one current braking parameter value in a volatile memory, detecting an end of mission (105), and copying (106) into the non-volatile memory at least a part of the content of the volatile memory.

7. Method according to one of Claims 1 to 6, in which, in addition to said at least one current braking parameter value, at least one additional value of said braking parameter, corresponding to at least one respective instant prior to and/or following the current instant, is stored.

8. Method according to Claim 7, in which a number of event types (102, 104, 105) condition the execution of the storage step (103, 109, 106), **characterized in that** said at least one additional value is chosen as a function of the type of event having triggered the execution of the storage step.

9. Diagnostic device (7) for an a posteriori analysis of the behavior of a braking system of a motor vehicle (1), the braking system comprising a regenerative braking means (4), a complementary braking means (5), and a distribution device (6) arranged to generate, from a global braking setpoint ($Cf_r$) obtained from a brake pedal (2), a regenerative braking setpoint ($C_{el}$) intended for the regenerative braking means, and a complementary braking setpoint (Chydr) intended for the complementary braking means, said device comprising:

storage means for storing, in a non-volatile memory, at least one current braking parameter value obtained from the distribution device for a subsequent analysis based on said at least one stored value, and means for testing the execution of at least one event (102, 104, 105).

10. Vehicle (1) comprising the regenerative braking means (4), the complementary braking means (5), the distribution device (6) and the diagnostic device (7) according to Claim 9.

$C_{hydr}$

$C_{cl}$

$C_{Fr}$

5

4

6

7

3

2

1

FIG.1

$$i := 1$$

$$\text{rcpt} \left\{ S_n^{(i)} \right\}_n \quad 101$$

$$\text{C1?} \quad 102$$

$$\text{WR RAM} \left\{ S_n^{(j)} \right\}_{n \in [1,N], j \in [i-1, i+5]} \quad 103$$

N

$$\text{C2?} \quad 104$$

$$\text{WR RAM} \left\{ S_n^{(j)} \right\}_{n \in [1,N], j \in [i-4, i+2]} \quad 109$$

N

108  $i++$

107  $\mathcal{C}$

$$\text{flag\_end} == 1 \ ? \quad 105$$

N

$$\text{COPY RAM} \rightarrow \text{EEPROM} \quad 106$$

F I G. 2

**FIG.3**

**EP 2 852 518 B1**

## RÉFÉRENCES CITÉES DANS LA DESCRIPTION

**Documents brevets cités dans la description**

- FR 1159106

- US 2010179714 A1